# DEMANDE DE BREVET EUROPEEN

(11) **EP 1 022 869 A1**
(43) Date de publication de la demande: **26.07.2000**
(21) Numéro de dépôt: 00400126.9
(22) Date de dépôt: 18.01.2000
(51) Int. Cl.: H04B 10/00, G02B 6/42

(54) **Equipement de secours pour sources multiplexées en longueurs d'onde**

(30) Priorité: 20.01.1999 FR 9900590
(71) Demandeur: ALCATEL, 75008 Paris (FR)
(72) Inventeur: Artigue, Claude, 94230 Cachan (FR); Brillouet, Francois, 94230 Cachan (FR); Grard, Emmanuel, 94230 Cachan (FR); Bissessur, Hans, 94230 Cachan (FR)
(74) Mandataire: Ballot, Paul

(57) **Abrégé**

La présente invention concerne un équipement de secours pour sources multiplexées en longueurs d'onde afin de fournir une longueur d'onde de remplacement d'un laser défectueux du multiplexeur.

Selon l'invention, l'équipement de secours comprend:
- un module de secours (3) comprenant n sources lumineuses (Sn) de longueurs d'onde généralement différentes, chaque source (Sn) étant couplée à une des n entrées d'un connecteur optique (4) à n canaux (13n), et
- des moyens de couplage (5) entre un canal du connecteur optique (4) à n canaux et une fibre optique (20n) de sortie.

L'invention s'applique à un module optoélectronique utilisé dans la transmission optique d'information.

## Description

La présente invention concerne un module optoélectronique de secours utilisé dans le cadre de la transmission optique d'information.

Plus particulièrement, dans le cadre de ce que l'on appelle les autoroutes de l'information, différentes sources de lumière monochromatiques sont utilisées pour superposer n longueurs d'onde différentes dans des fibres optiques. On utilise en général des sources lasers à résonateurs distribués (DFB: Distributed Feed Back en anglais) qui émettent une lumière à une longueur d'onde donnée et non pas un faisceau de lumière étalé sur un peigne de longueurs d'onde. Typiquement, 16 longueurs d'onde sont superposées, chacune étant émise par 16 lasers DFB indépendants les uns des autres.

Ces lasers sont susceptibles de tomber en panne au cours de leur utilisation. Le problème consiste alors à trouver un moyen de remplacer provisoirement le laser défectueux le temps de son échange standard par un laser semblable.

La présente invention a pour objet de réaliser un module émetteur de lumière capable de remplacer à tout moment n'importe lequel des n lasers défectueux afin de continuer à émettre la longueur d'onde manquante de manière à ne pas interrompre la transmission d'information.

Il existe à ce jour deux alternatives pour remplacer une source défaillante.

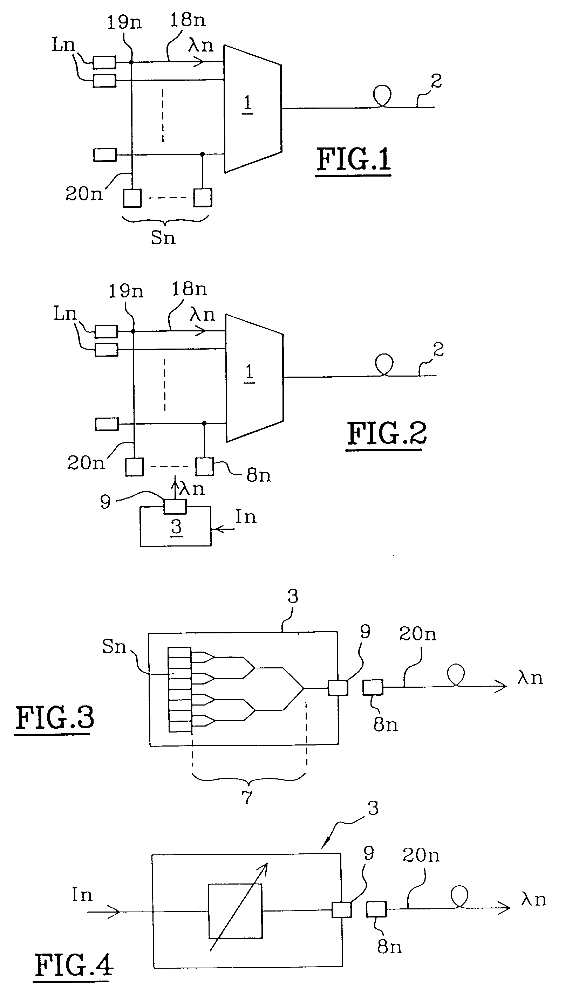

La première alternative, connue de l'état de la technique, est illustrée sur la figure 1.

Un multiplexeur 1 reçoit en entrée n fibres optiques 18n transmettant chacune une longueur d'onde λn donnée émise par un laser source Ln. En sortie, les signaux lumineux sont superposés pour la transmission d'une information dans une fibre optique 2.

Dans l'hypothèse où une source lumineuse Ln tombe en panne, une solution consiste à garder en stock n lasers de secours Sn correspondant aux n longueurs d'onde émises par les n lasers sources Ln et à connecter le laser de secours Sn émettant la longueur d'onde du laser en panne sur la fibre optique 18n correspondante par le biais d'un interrupteur 19n.

Cette solution nécessite d'avoir autant de lasers de secours Sn que de lasers sources Ln. Par conséquent, cette solution n'est pas avantageuse car elle est lourde à mettre en oeuvre et coûteuse.

La seconde alternative, plus intéressante au niveau du coût, est illustrée sur la figure 2. Cette solution consiste à remplacer les n lasers de secours par un seul module 3 capable de fournir la longueur d'onde manquante λn. Un tel module de secours fonctionne par exemple avec des courants à injecter. Si on souhaite émettre la longueur d'onde λ₃, on injecte un courant I₃ qui activera le laser de secours S₃ apte à émettre la longueur d'onde souhaitée. La gestion de l'équipement de secours se limite alors à un seul module et non pas à n lasers différents.

Le module de secours 3 est en outre éventuellement munie d'un connecteur simple 9 apte à coopérer avec un des n connecteurs simples 8n de chaque fibre optique 20n de secours. Ces fibres optiques de secours 20n sont reliées aux fibres optiques d'entrée 18n du multiplexeur 1 par des interrupteurs 19n.

Le problème consiste donc à réaliser un module de secours capable d'émettre n longueurs d'onde au choix.

Il existe déjà de tels modules de secours dans l'état de la technique.

Un premier module de secours connu de l'état de la technique est illustré sur la figure 3. Un tel module utilise n lasers Sn capables d'émettre chacun une des n longueurs d'onde de remplacement et des combineurs optiques 7 pour placer le faisceau de la longueur d'onde λn manquante sur une seule voie de sortie qui sera connectée à la fibre optique 20n de secours correspondante grâce aux connecteurs simples 9 et 8n.

Cette solution présente l'inconvénient d'induire des pertes importantes au niveau des combineurs optiques 7. Par exemple, si n=8, on introduit 9dB de pertes et si n=16, on introduit 12dB de pertes.

La puissance des lasers DFB étant limitée, la puissance de sortie sera de plus en plus faible au fur et à mesure que le système grossit.

Une deuxième solution connue de l'art antérieur est illustrée sur la figure 4. Cette solution consiste à utiliser un laser accordable apte à émettre une longueur d'onde λₙ donnée en fonction du courant de commande Iₙ.

Cette solution présente néanmoins des inconvénients. D'une part, un tel laser est beaucoup plus complexe à réaliser qu'un laser monochromatique, ce qui implique un coût plus élevé. D'autre part, la fiabilité dans le temps d'un tel laser n'est pas bien connue et la précision de la longueur d'onde émise n'est pas trés bonne. Le faisceau émis est généralement compris dans une gamme de longueurs d'onde (λₘₐₓ-λₘᵢₙ) qui provient pour partie de l'imprécision de l'électronique de commande de la modulation du laser. En pratique, cette solution est rarement utilisée.

La présente invention propose de pallier aux inconvénients de l'art antérieur et propose un module de secours capable d'émettre une lumière à une longueur d'onde donnée avec précision tout en évitant des pertes prohibitives.

A cet effet, la présente invention propose d'utiliser n sources monochromatiques reliées à un connecteur à n canaux par n guides optiques remplaçant les combineurs optiques qui introduisent trop de pertes.

Chaque fibre optique de sortie est en outre munie de moyens de couplage qui permettent, de par leur conception, d'aligner la fibre dans laquelle on souhaite injecter la longueur d'onde de remplacement avec un des n guides optiques aboutissant dans le connecteur à n canaux du module de secours.

La présente invention a plus particulièrement pour objet un équipement de secours pour sources multipléxées en longueurs d'onde, caractérisé en ce qu'il comprend:
- un module de secours comprenant n sources lumineuses de longueurs d'onde généralement différentes, chaque source étant couplée à une des n entrées d'un connecteur optique à n canaux, et
- des moyens de couplage entre un canal du connecteur optique à n canaux et une fibre optique de sortie.

Selon une autre caractéristique, les moyens de couplage comportent une série de n connecteurs aveugles, chaque connecteur étant apte à coopérer en entrée, avec un canal du connecteur optique à n canaux du module de secours, chaque connecteur étant en outre relié en sortie à une fibre optique.

Selon une autre caractéristique, les moyens de couplage comportent un connecteur optique à n canaux apte à coopérer en entrée avec le connecteur optique à n canaux du module de secours, chaque canal dudit connecteur étant relié en sortie à une fibre optique de connexion.

Selon une autre caractéristique, les n connecteurs aveugles sont identiques au connecteur optique à n canaux du module de secours, un seul des n canaux étant relié à une fibre optique, les autres canaux restant inutilisés.

Selon une autre caractéristique, les n sources lumineuses consistent en n sources lasers à résonateurs distribués en barrette monolithique et/ou en n sources individuelles.

Selon une autre caractéristique, les n sources lumineuses consistent en n cavités hybrides précédées de n fibres ou guides d'optique intégrée.

Selon une autre caractéristique, le support des sources lumineuses est constitué par une plaquette de silicium.

Selon une autre caractéristique, le couplage entre les n sources lumineuses et les n canaux du connecteur optique du module de secours est réalisé en partie par des guides de silice définis sur la plaquette de silicium, et en partie par des fibres optiques.

Selon une autre caractéristique, le couplage entre les n sources lumineuses et les n canaux du connecteur optique du module de secours est réalisé par des fibres optiques.

Selon une autre caractéristique, le support silicium comprend des rainures pour le positionnement des fibres optiques de couplage entre les sources lumineuses et le connecteur optique à n canaux.

Le module de secours selon l'invention présente l'avantage de réduire substantiellement les pertes d'insertion entre le laser et la fibre. En effet, on estime à environ 0,5dB les pertes au niveau de la connexion du connecteur à n canaux avec les moyens de couplages des fibres optiques de sortie, ce qui se situe largement en dessous des pertes induites par les combineurs optiques des modules de l'art antérieur.

Ces pertes sont indépendantes du nombre de canaux utilisés, ce qui n'était pas le cas des combineurs utilisés dans l'art antérieur.

La présente invention repose en outre sur un principe simple, les connecteurs sont faciles à réaliser et ne nécessitent pas la mise en place d'une nouvelle technologie.

Les connecteurs utilisés dans la mise en oeuvre de l'invention sont des composants passifs et par conséquent fiables dans le temps et peu onéreux.

Le module selon l'invention présente en outre l'avantage de laisser une liberté totale quant au choix de la source de lumière. Toute structure générant un peigne de n longueurs d'onde peut être utilisée en amont du connecteur à n canaux du module de secours.

En outre, une liberté totale existe également quant au choix du support sur lequel sont placés les sources lumineuses et le connecteur à n canaux.

Le module selon la présente invention nécessite la présence d'un connecteur à n canaux, ce qui peut sembler constituer un désavantage par rapport aux modules présentant simplement une fibre ou un pinceau de fibres en sortie.

Néanmoins, la tendance actuelle est de s'orienter vers des modules à montage en surface (SMT: Surface Mounted Technology en anglais) où les composants sont directement positionnés sur la surface de la carte imprimée puis soudés, par opposition à des technologies où les composants sont munis d'aiguilles qui traversent la carte. La technologie SMT nécessite l'utilisation de modules pouvant supporter un procédé à une température typique de 270°C pour la fusion des soudures des connexions, ce qui exclu les fibres optiques dont les gaines ne supportent en général qu'une température de l'ordre de 80°C sans détérioration.

La technologie SMT étant généralement utilisée dans des procédés de fabrication industrielle en grande série, la présence d'un connecteur au lieu d'une fibre de sortie constitue en fait un avantage supplémentaire pour le module de secours de la présente invention.

D'autres avantages et particularités de la présente invention apparaîtront au cours de la description qui suit, donnée à titre d'exemple illustratif et non limitatif, en référence aux figures en annexe dans lesquelles :
- la figure 1, déjà décrite, est un schéma d'une première alternative de l'état de la technique pour remplacer des lasers défectueux,
- la figure 2, déjà décrite, est un schéma d'une deuxième alternative de l'état de la technique pour remplacer des lasers défectueux,
- la figure 3, déjà décrite, est un schéma d'un module de secours selon une première solution de l'état de la technique,
- la figure 4, déjà décrite, est un schéma d'un module de secours selon une deuxième solution de l'état de la technique,
- la figure 5, est un schéma d'un module de secours selon un premier mode de réalisation de la présente invention,
- la figure 6, est un schéma d'un module de secours selon un deuxième mode de réalisation de la présente invention,
- la figure 7 est un schéma de la mise en oeuvre du module de secours selon les deux premiers modes de réalisation de la présente invention,
- la figure 8 est un schéma détaillé d'une réalisation du module de secours correspondant au mode de réalisation de la figure 6,
- la figure 9, est un schéma d'un module de secours selon un troisième mode de réalisation,
- la figure 10 est un schéma de la mise en oeuvre du module de secours selon le troisième mode de réalisation de la présente invention.

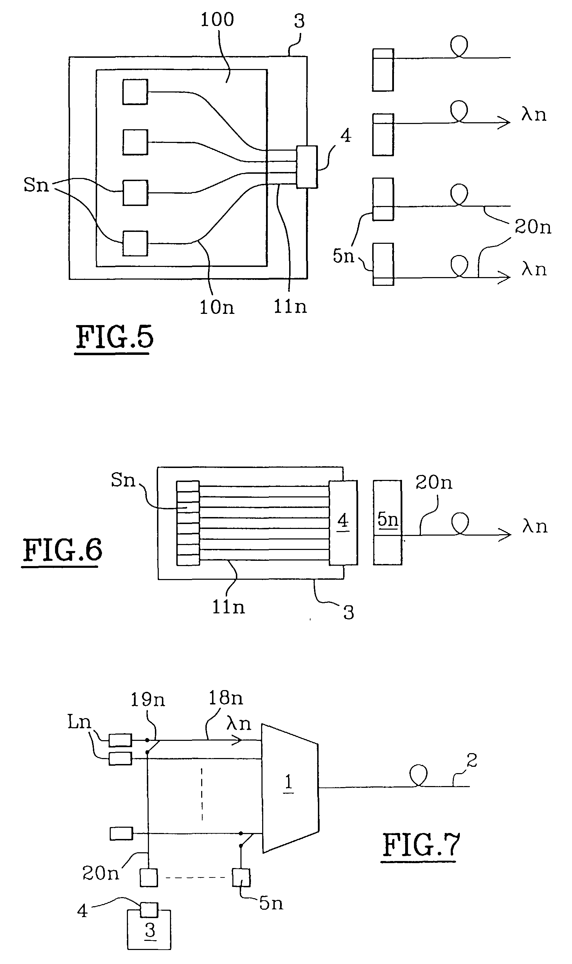

La figure 5 illustre un équipement de secours pour sources multipléxées en longueurs d'onde selon un premier mode de réalisation de la présente invention.

Un tel équipement se compose d'un module de secours 3 et d'une série de connecteurs aveugles 5n.

Le module de secours 3 est muni d'un connecteur optique 4 à n canaux et d'un support 100 sur lequel sont situées des sources de lumière monochromatiques Sn générant un peigne de longueurs d'onde λn.

Les connecteurs aveugles 5n sont aptes à coopérer en entrée avec un canal du connecteur 4 du module 3, et sont reliés en sortie à une fibre optique 20n dans laquelle se propage la longueur d'onde λn de remplacement. Chaque connecteur aveugle 5n peut être alternativement connecté au connecteur optique 4 à n canaux du module 3.

Selon une particularité avantageuse de la présente invention, les connecteurs aveugles 5n sont identiques au connecteur optique 4 à n canaux du module de secours 3, un seul des n canaux étant relié à une fibre optique 20n et les autres canaux restant inutilisés. Il n'est par conséquent pas nécessaire de développer une technologie spécifique pour les connecteurs aveugles 5n, étant donné que les connecteurs à n canaux tel que celui utilisé dans le module de secours 3 sont très bien connus de l'homme du métier.

Avantageusement, le canal correspondant à chaque longueur d'onde λn peut être repéré sur les connecteurs 5n par un code couleur par exemple.

Selon ce mode de réalisation, les sources lumineuses Sn sont des sources individuelles telles que des puces laser à résonateurs distribués (DFB) ou des cavités hybrides telles que des cavités de Fabry Perrot associées à ces fibres à réseau de diffraction par exemple. Ces sources lumineuses Sn sont avantageusement placées sur un support en silicium 100.

Le couplage entre les sources de lumière Sn et le connecteur optique 4 à n canaux dans le module 3 est alors préférentiellement réalisé en partie par des guides de silice 10n définis dans le support en silicium 100, l'autre partie du couplage étant réalisée par des fibres optiques 11n.

Les fibres optiques 11n reliant les guides de silice 10n au connecteur 4 peuvent avoir une longueur variable suivant les applications. Il est également possible de relier directement les guides de silice 10n aux canaux du connecteur 4 à n canaux sans utiliser de fibres optiques.

Les guides optiques 10n constituent une sorte d'éventail qui n'entraîne pratiquement aucune perte et qui réduit le pas effectif des lasers Sn à un pas effectif plus petit afin de permettre l'utilisation d'un connecteur optique 4 plus compact. Classiquement, le pas entre les fibres optiques est de 250 µm, ce qui peut être trop étroit pour le report de sources de lumière individuelles Sn sur un support en silicium 100.

La présente invention réduit substantiellement les pertes de puissance lumineuse entre la source Sn et la fibre de sortie 20n. En effet, les guides de silice 10n présentent des courbures suffisamment faibes pour minimiser les pertes et la connexion entre les deux connecteurs 4 et 5n n'induit environ que 0.5dB de pertes.

La figure 6 illustre un équipement de secours pour sources multipléxées en longueurs d'onde selon un deuxième mode de réalisation de la présente invention.

Un tel équipement se compose également d'un module de secours 3 et d'une série de connecteurs aveugles 5n.

Selon ce mode de réalisation, les sources lumineuses Sn sont constituées par une barrette de lasers reportée, par un procédé de connexion en "flip chip" (puce retournée) par exemple, sur un support 100 en silicium.

Le couplage entre les sources de lumière Sn et le connecteur optique 4 à n canaux dans le module 3 est alors préférentiellement réalisé par l'intermédiaire de fibres optiques droites 11n afin de limiter les pertes.

La figure 7 illustre la mise en oeuvre de la présente invention.

Lors de la mise en place du multiplexeur en longueurs d'onde 1, des aiguillages 19n ont avantageusement été prévus sur chaque voie de transmission 18n d'une longueur d'onde donnée λn.

Lorsqu'un laser source Ln tombe en panne, l'aiguillage correspondant 19n est basculé vers la fibre optique de secours 20n. Le connecteur aveugle 5n situé en extrémité de la fibre de secours 20n est relié au connecteur 4 du module de secours 3 qui émet la longueur d'onde manquante λn.

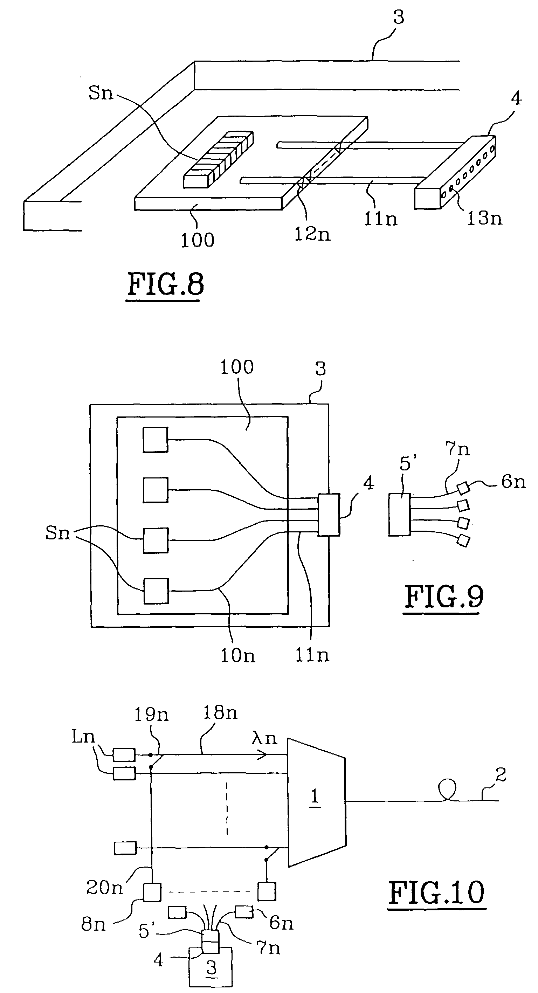

La figure 8 est un schéma détaillé d'une réalisation du module de secours 3 correspondant au mode de réalisation de la figure 6.

Une barrette de laser Sn, par exemple, est reportée sur un support 100 en silicium munie de rainures en V 12n pour supporter les fibres optiques 11n qui sont positionnées devant chaque puce de laser Sn. Ces supports mécaniques en V 12n sont connus dans l'état de la technique et permettent un alignement passif de la fibre optique 11n avec la puce de laser Sn correspondante.

Préférentiellement, les fibres optiques 11n ont une longueur prévue afin de garantir un jeu entre les rainures 12n du silicium et le connecteur 4 de manière à éviter les tensions trop fortes.

Selon une variante de réalisation, non illustrée, les lasers Sn et les fibres optiques 11n sont placés sur des supports distincts et le couplage entre le laser Sn et les fibres optiques 11n est réalisé selon une méthode d'assemblage YAG.

En effet, les fibres 11n sont positionnées dans des rainures en V sur un support métallique et la barrette de laser Sn est fixée sur un autre support métallique. Le positionnement des fibres optiques par rapport aux lasers est alors effectué en dynamique par un alignement optique actif. Les lasers émettent de la lumière dans les fibres et, lorsque le signal lumineux est optimisé pour chaque fibre, les deux supports métalliques sont fixés par soudure avec des lasers YAG.

Le connecteur 4 peut avantageusement être un connecteur connu de type MT (Mechanical Transfert en anglais, Transfert Mécanique) qui utilise des plots pour un alignement par transfert mécanique afin d'aligner facilement les n canaux 13n du connecteur 4 avec les n fibres optiques 11n du module de secours 3.

La figure 9 illustre un équipement de secours pour sources multiplexées en longueurs d'onde selon un troisième mode de réalisation de la présente invention.

Un tel équipement se compose d'un module de secours 3 et d'un connecteur 5' à n canaux.

Le module de secours 3 peut être identique à un des modules décrits dans les modes de réalisations précédents.

Le connecteur 5' à n canaux est identique au connecteur optique 4 du module de secours 3 et coopère avec ce dernier en entrée. Le connecteur 5' présente en outre en sortie n fibres optiques 7n.

Ces fibres optiques 7n de sortie du connecteur 5' sont éventuellement munie chacune d'un connecteur simple 6n pouvant être relié à la fibre optique 20n de secours du multiplexeur. Elles peuvent également être directement soudées aux fibres optiques 20n de secours du multiplexeur.

La figure 10 illustre schématiquement la mise en oeuvre du module de secours 3 selon le troisième mode de réalisation de la présente invention.

Lorsqu'un laser source Ln tombe en panne, l'aiguillage correspondant 19n bascule sur la fibre optique de secours 20n munie en extrémité d'un connecteur 8n simple qui peut être relié à une des fibres optiques de sortie 7n du connecteur 5' à n canaux afin de transmettre la longueur d'onde λn de remplacement dans le multiplexeur 1.

Il est a noter, dans le cas où les sources de lumière sont constituées par des lasers DFB, qu'il est préférable de prévoir des isolateurs optiques sur chaque fibre optique, entre chaque source et le connecteur, afin d'éviter que de la lumière réfléchie par le connecteur ne perturbe le fonctionnement de la source. De tels isolateurs optiques laissent passer la lumière dans un sens (laser vers fibre) et sont totalement opaques dans l'autre sens (fibre vers laser). Les isolateurs optiques peuvent être placés n'importe où sur le module entre le laser et le connecteur. Ils peuvent avantageusement être intégrés au boîtier du connecteur.

Dans le cadre de certaines applications, il est nécessaire d'inclure des modulateurs de puissance afin de moduler le signal continu du laser pour obtenir une puissance de sortie en créneaux. De tels modulateurs étant sensibles à la polarisation de la lumière, il est alors nécessaire, pour ces applications données, d'utiliser des fibres optiques à maintien de polarisation. Si le laser émet une lumière polarisée TE par exemple, il faut que cette polarisation soit contrôlée tout au long de la transmission dans la fibre optique.

## Revendications

1. Equipement de secours pour sources multipléxées en longueurs d'onde, caractérisé en ce qu'il comprend:
- un module de secours (3) comprenant n sources lumineuses (Sn) de longueurs d'onde généralement différentes (λn), chaque source (Sn) étant couplée à une des n entrées d'un connecteur optique (4) à n canaux (13n), et
- des moyens de couplage (5) entre un canal du connecteur optique (4) à n canaux et une fibre optique (20n) de sortie.

2. Equipement de secours selon la revendication 1, caractérisé en ce que les moyens de couplage (5) comportent une série de n connecteurs aveugles (5n), chaque connecteur (5n) étant apte à coopérer en entrée, avec un canal (13n) du connecteur optique (4) à n canaux du module de secours (3), chaque connecteur (5n) étant en outre relié en sortie à une fibre optique (20n).

3. Equipement de secours selon la revendication 1, caractérisé en ce que les moyens de couplage (5) comportent un connecteur optique à n canaux (5') apte à coopérer en entrée avec le connecteur optique (4) à n canaux du module de secours (3), chaque canal dudit connecteur (5') étant relié en sortie à une fibre optique (7n) de connexion.

4. Equipement de secours selon la revendication 2, caractérisé en ce que les n connecteurs aveugles (5n) sont identiques au connecteur optique (4) à n canaux du module de secours (3), un seul des n canaux étant relié à une fibre optique (20n), les autres canaux restant inutilisés.

5. Equipement de secours selon l'une quelconque des revendications 1 à 4, caractérisé en ce que les n sources lumineuses (Sn) consistent en n sources lasers à résonateurs distribués en barrette monolithique et/ou en n sources individuelles.

6. Equipement de secours selon l'une quelconque des revendications 1 à 4, caractérisé en ce que les n sources lumineuses (Sn) consistent en n cavités hybrides précédées de n fibres ou guides d'optique intégrée.

7. Equipement de secours selon l'une quelconque des revendications 1 à 6, caractérisé en ce que le support des sources lumineuses (Sn) est constitué par une plaquette de silicium (100).

8. Equipement de secours selon la revendication 7, caractérisé en ce que le couplage entre les n sources lumineuses (Sn) et les n canaux (13n) du connecteur optique (4) du module de secours (3) est réalisé en partie par des guides de silice (10n) définis dans la plaquette de silicium (100), et en partie par des fibres optiques (11n).

9. Equipement de secours selon l'une quelconque des revendications 1 à 7, caractérisé en ce que le couplage entre les n sources lumineuses (Sn) et les n canaux (13n) du connecteur optique (4) du module de secours (3) est réalisé par des fibres optiques (11n).

10. Equipement de secours selon la revendication 7 et la revendication 9, caractérisé en ce que le support silicium (100) comprend des rainures (12n) pour le positionnement des fibres optiques (11n) de couplage entre les sources lumineuses (Sn) et le connecteur optique (4) à n canaux (13n).
